# EUROPÄISCHE PATENTSCHRIFT

(11) **EP 1 159 147 B1**
(45) Veröffentlichungstag und Bekanntmachung des Hinweises auf die Patenterteilung: **06.08.2003**
(21) Anmeldenummer: 00907525.0
(22) Anmeldetag: 09.02.2000
(51) Int. Cl.: B60G 21/05, B60B 35/02

(54) **VERBUNDLENKERACHSE**
COMPOSITE PIVOT PIN
ESSIEU DIRECTEUR COMPOSITE

(30) Priorität: 10.03.1999 DE 19910575
(43) Veröffentlichungstag der Anmeldung: 05.12.2001
(73) Patentinhaber: Volkswagen Aktiengesellschaft, 38436 Wolfsburg (DE)
(72) Erfinder: HÜBNER, Ulrich, D-38547 Calberlah (DE); HASSELMEYER, Alfred, D-38524 Westerbeck (DE)
(86) Internationale Anmeldenummer: EP0001022
(87) Internationale Veröffentlichungsnummer: WO00053443

(56) Entgegenhaltungen:
- EP-A- 0 681 932
- EP-A- 0 752 332
- EP-A- 0 867 318
- FR-A- 2 526 721
- FR-A- 2 547 540
- FR-A- 2 581 594
- FR-A- 2 750 925
- FR-A- 2 761 304
- GB-A- 2 222 987

## Beschreibung

Die vorliegende Erfindung bezieht sich auf eine Verbundlenkerachse für ein Kraftfahrzeug nach dem Oberbegriff des Anspruches 1 und insbesondere auf eine Hinterachse.

Aus der DE 198 08 178 A1 ist eine Verbundlenkerhinterachse bekannt, die zwei Längsträger aufweist, die sich im wesentlichen in Fahrzeuglängsrichtung erstrecken und bei der die beiden Längsträger über einen Torsionsquerträger miteinander verbunden sind. Diese bekannte Verbundlenkerachse weist im Bereich der Anlenkung des Torsionsquerträgers an den Längsträgern über eine Schweißverbindung an dem Querträger Ausschnitte auf, die bei einer Torsionsbelastung des Querträgers eine Überbeanspruchung der Schweißnaht durch Zugspannungen vermeiden. Die Längsträger sind dabei über Lenker mit der Fahrzeugkarosserie verbunden und zwar derart, daß an beiden Enden des Lenkers Gummilager vorgesehen sind, mit denen der Lenker an der Fahrzeugkarosserie und an dem Längsträger schwenkbar festgelegt ist. Dadurch ist jedoch die Stützbasislänge, das heißt, der in Fahrzeugquerrichtung verlaufende Abstand zwischen den beiden Lagerungen, mit denen der Längsträger an der Fahrzeugkarosserie schwenkbar angelenkt ist, ist gering.

Die Stützbasislänge bzw. Bockspurweite steht mit dem Nachspurwinkel in einer quadratischen Beziehung. Eine geringe Stützbasislänge führt bei einer Kurvenfahrt aufgrund der sich an den Radaufstandspunkten einstellenden Seitenkräfte zu einem für den Fahrkomfort und die Fahrdynamik negativen Nachspurwinkel. Dieser negative Einfluß kann durch eine Verbreiterung der Stützbasislänge zugunsten des Komforts und der Fahrdynamik positiv beeinflußt werden.

Eine entsprechende Verbundlenkerachse mit den Merkmalen des Oberbegriffes von Patentanspruch 1 ist aus der GB-A 2 222 987 bekannt. Allerdings ist die Herstellung der dort offenbarten Verbundlenkerachse aufwendig.

Der Erfindung liegt daher die Aufgabe zugrunde, eine Verbundlenkerachse mit großer Stützbasislänge zu schaffen, die sich überdies einfach herstellen läßt.

Dazu wird Verbundlenkerachse für ein Kraftfahrzeug vorgeschlagen, umfassend zwei sich im wesentlichen in Fahrzeuglängsrichtung erstreckende Längsträger und einen mit den beiden Längsträgem verbundenen Torsionsquerträger, wobei ein vorderes Ende jedes Längsträgers an dem Fahrzeug angelenkt ist und ein hinteres Ende zur drehbaren Anordnung eines Rades ausgebildet ist, und wobei die Längsträger im Bereich ihrer Antenkung an dem Fahrzeug von einer Längsmittelachse des Fahrzeugs in Richtung nach außen zur Verbreiterung einer Stützbasis gekrümmt ausgebildet sind, derart, daß sich ein Anlenkpunkt außerhalb einer parallel zu der Fahrzeuglängsmittelachse verlaufenden Längsträgermittelachse befindet, dadurch gekennzeichnet, daß jeder Längsträger aus einem einstückigen Rohr C-förmig gebogen ist, dessen Enden in Richtung parallel zu der Fahrzeuglängsmittelachse angeordnet sind und an denen jeweils ein Anschlußelement mit einer parallel zu der Fahrzeuglängsmittelachse verlaufenden Anschlußfläche abgestützt und befestigt ist.

Vorteilhafte Ausgestaltungen hiervon sind in den weiteren Ansprüchen beschrieben. Es ist beispielsweise möglich, an dem Längsträger jeweils im Bereich der Anlenkung an dem Fahrzeug eine Aufnahme für ein Lager anzuordnen ist, wobei die Aufnahme eine das Rohrende verschließende Platte mit einer Gewindebohrung sein kann.

Vorzugsweise weist die Platte eine weitgehend parallel zur Fahrzeuglängsmittelachse verlaufende Anbindungsfläche auf. Der Torsionsquerträger kann ein ganz allgemein im Querschnitt U-förmiges oder V-förmiges Profil aufweisen, wobei das Profil ein geschlossenes Hohlprofil sein kann. Der als geschlossenes Hohlprofil ausgebildete Torsionsquerträger zeichnet sich dabei dadurch aus, daß sich der Hohlraum von der Verbindungsstelle mit dem Fahrzeuglängsträger zur Fahrzeuglängsmittelachse hin gerichtet verjüngt. In einer weiteren vorteilhaften Ausgestaltung der Erfindung kann der Torsionsquerträger zur Verstimmung des Eigenschwingverhaltens auch asymmetrisch ausgebildet sein.

Die Erfindung wird im folgenden anhand der Zeichnung näher erläutert. Diese zeigt in:
- Fig. 1: in einer Ansicht von oben ausschnittsweise eine Verbundlenkerachse nach der Erfindung mit einem Längsträger und einem Teil eines Torsionsquerträgers;
- Fig. 2: in einer perspektivischen Darstellung einen freigeschnittenen Torsionsquerträger;
- Fig. 3: einen Schnitt durch den Torsionsquerträger gemäß der Linie III-III nach Fig. 2;
- Fig. 4: einen Schnitt durch den Torsionsquerträger gemäß der Linie IV-IV nach Fig. 2.

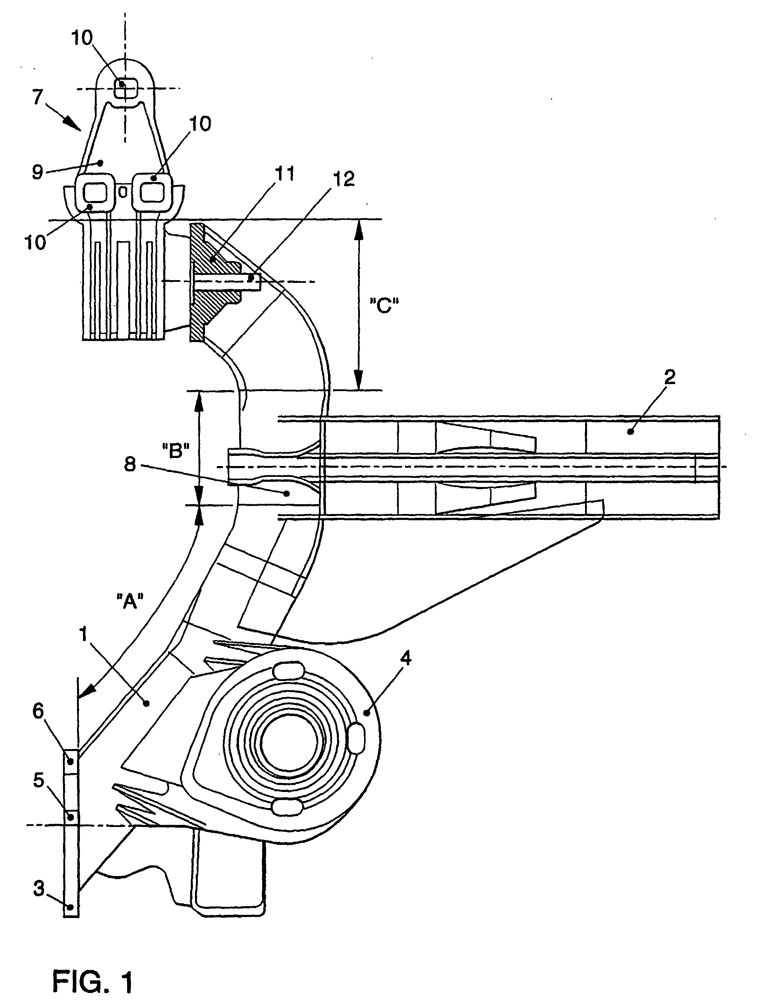

Fig. 1 der Zeichnung zeigt ausschnittsweise eine Verbundlenkerachse nach der Erfindung mit einem Längsträger 1 und einem daran beispielsweise über eine Schweißverbindung festgelegten Torsionsquerträger 2. Der Längsträger 1 ist im Bereich seines in Fahrzeuglängsrichtung betrachtet hinterem Ende 3 zur Aufnahme eines nicht näher dargestellten Rades des Kraftfahrzeuges ausgebildet und besitzt hierzu einen Radträger 5, an dem das Rad drehbar festgelegt werden kann. Auch weist der Längsträger 1 im Bereich des hinteren Endes eine Aufnahme 4 für eine nicht näher dargestellte Feder oder eine Feder-Dämpferelementkombination auf.

Der vorstehend bereits angesprochene Radträger 5 besitzt eine parallel zur Fahrzeuglängsmittelachse verlaufende Anbindungsfläche 6 für das Rad, von der ausgehend der Längsträger 1 eine in diesem Bereich in Richtung zur Fahrzeuglängsmittelachse hin nach innen gerichtet verlaufendes Profil aufweist, welches beispielsweise durch ein entsprechend gebogenes Rohrprofil realisiert sein kann. Die Fahrzeuglängsmittelachse ist dabei durch die gestrichelte mit I-I bezeichnete Linie in Fig. 1 dargestellt. Der Längsträger 1 verläuft daher im Bereich des Radträgers 5 von diesem ausgehend zur Fahrzeuglängsmittelachse I-I nach innen gerichtet gekrümmt (Bereich "A"), bis er in einem mit "B" bezeichneten Bereich in einen parallel zur Fahrzeuglängsmittelachse I-I verlaufenden Bereich übergeht, an dem der Torsionsquerträger 2 über eine Schweißverbindung oder dergleichen festgelegt werden kann.

In dem mit B bezeichneten Bereich verläuft der Längsträger 1 in etwa parallel zur Fahrzeuglängsmittelachse I-I, wobei sich an den Bereich B ein weiterer mit "C" bezeichneter Bereich anschließt, der eine entgegengesetzte Krümmung zu der im Bereich "A" vorliegenden Krümmung des Längsträgers 1 aufweist.
Es heißt dies mit anderen Worten, daß der Längsträger 1 im Bereich "C" eine solche Krümmung aufweist, daß sich der Längsträger 1 von der Anbindungsfläche des Torsionsquerträgers 2 am Längsträger 1 in Richtung von der Fahrzeuglängsmittelachse I-I nach außen gerichtet aufweitet und somit die Stützbasis zunimmt.

Im Bereich "B" besitzt der Längsträger 1 eine Längsträgermittelachse, die weitgehend parallel zu der Fahrzeuglängsmittelachse I-I verläuft. Der Anlenkpunkt des Längsträgers 1, das heißt also der Punkt, an dem der Längsträger 1 an der Fahrzeugkarosserie über eine Lagerung schwenkbar festgelegt wird zur Krafteinleitung in die Fahrzeugkarosserie, der in Fig. 1 mit dem Bezugszeichen 7 versehen ist, befindet sich daher außerhalb der parallel zur Fahrzeuglängsmittelachse I-I verlaufenden Längsträgermittelachse 8-8. Bei der in Fig. 1 dargestellten Ausführungsform wird der Längsträger 1 über ein Lager 9 an der Fahrzeugkarosserie befestigt, welches wiederum über drei nicht näher dargestellte Schrauben an der Fahrzeugkarosserie festgelegt wird, die die drei Aufnahmen 10 des Lagers 9 durchsetzen. Eine über den Längsträger 1 in die Fahrzeugkarosserie eingeleitete Kraft wird also im Bereich der Schraubenbohrungen 10 eingeleitet, so daß sich der Anlenkpunkt 7 im Bereich innerhalb eines durch die drei Schraubenbohrungen 10 aufgespannten gedachten Dreiecks befindet. Der Anlenkpunkt 7 befindet sich daher bezogen auf die Fahrzeuglängsmittelachse I-I außerhalb der parallel zur Fahrzeuglängsmittelachse verlaufenden Längsträgermittelachse 8-8. Nachdem die Verbundlenkerachse auch an ihrer in der Zeichnungsebene rechten Hälfte einen entsprechend ausgebildeten Längsträger 1 aufweist, besitzt die Verbundlenkerachse nach der Erfindung eine breite Stützbasislänge "b", die sich durch den in Fahrzeugquerrichtung ergebenden Abstand zwischen den beiden Anlenkpunkten 7 ergibt. Diese Stützbasislänge oder Bockspurweite "b" der Verbundlenkerachse nach der Erfindung ist deutlich größer als dies bei bekannten Verbundlenkerachsen der Fall ist.

Zum Anschluß des Längsträgers 1 an das Lager 9 weist der Längsträger 1 eine Aufnahme in der Form einer das Rohrprofil des Längsträgers 1 verschließenden angeschweißten Platte 11 auf, die eine Gewindebohrung 12 zur Aufnahme einer nicht näher dargestellten Schraube besitzt. Mit dieser Schraube wird das Lager 9 über ein elastisches Zwischenglied in der Form beispielsweise einer Gummibuchse schwenkbar verbunden, wobei zu diesem Zweck die Aufnahme 11 eine weitgehend parallel zur Fahrzeuglängsmittelachse I-I verlaufende Anbindungsfläche für das Lager 9 beziehungsweise die zwischengeschaltete Gummibuchse besitzt.

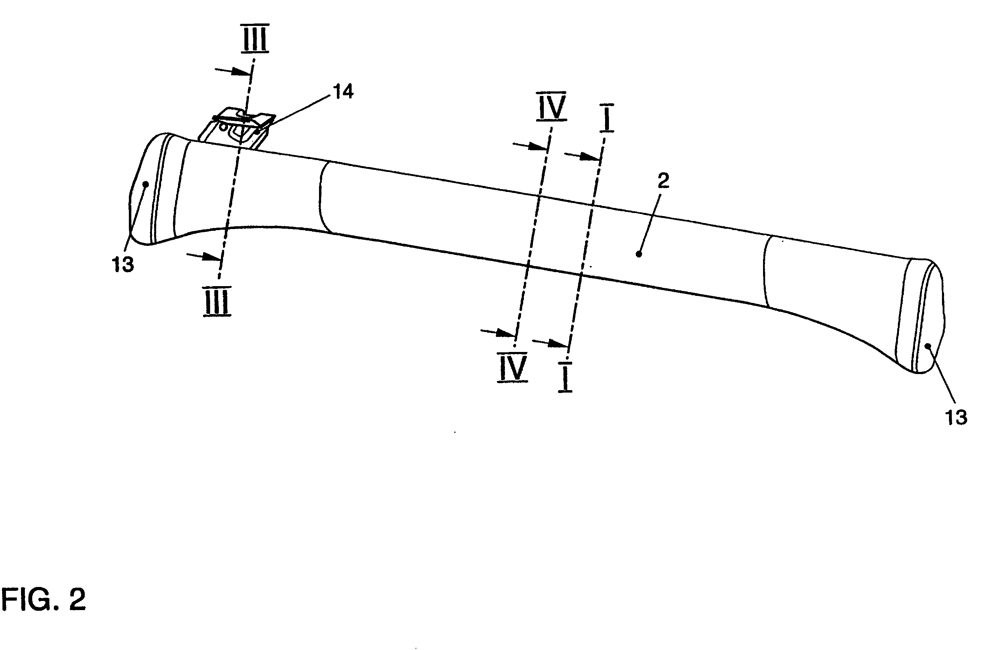

Fig. 2 der Zeichnung zeigt in einer perspektivischen Darstellung einen freigeschnittenen Torsionsquerträger 2, der mit seinen beidseitig vorgesehenen Anbindungsflächen 13 an dem in Fig. 1 dargestellten Längsträger 1 über eine Schweißverbindung festgelegt werden kann.

Der Torsionsquerträger 2 kann dabei eine ganz allgemein U-förmige oder V-förmige Form aufweisen und beispielsweise in Richtung zur Fahrbahnoberfläche, das heißt also nach unten gerichtet offen sein, wobei es auch möglich ist, das Profil des Torsionsquerträgers so auszubilden, daß die Öffnung in Fahrtrichtung des Fahrzeuges verläuft, also nach vorne. Auch ist es möglich den Torsionsquerträger 2 so auszubilden, daß er in einer Zwischenstellung zwischen den soeben beschriebenen Stellungen nach unten und nach vorne offen ist, um den jeweiligen Torsionsbelastungen entsprechend den Schubmittelpunkt des Profils des Torsionsquerträgers 2 auszurichten.

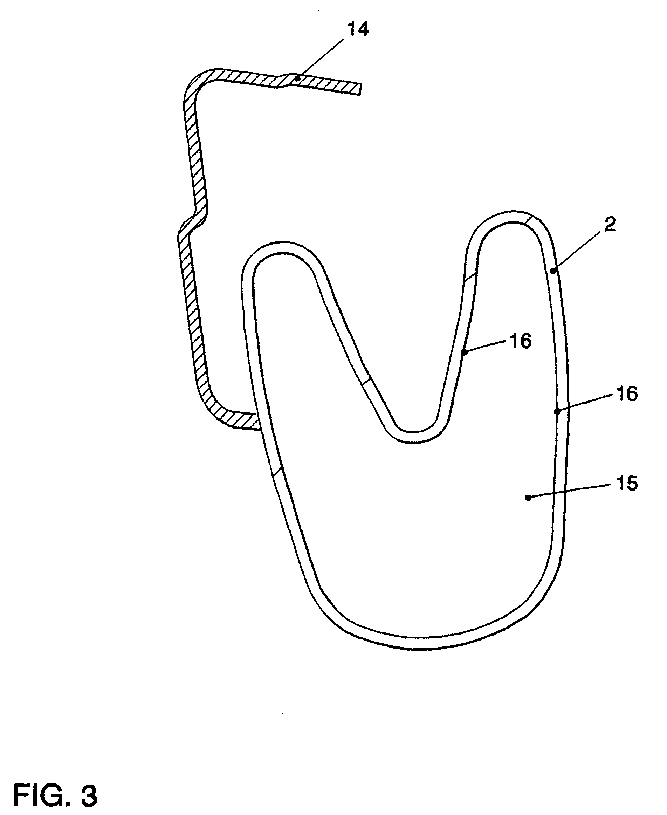

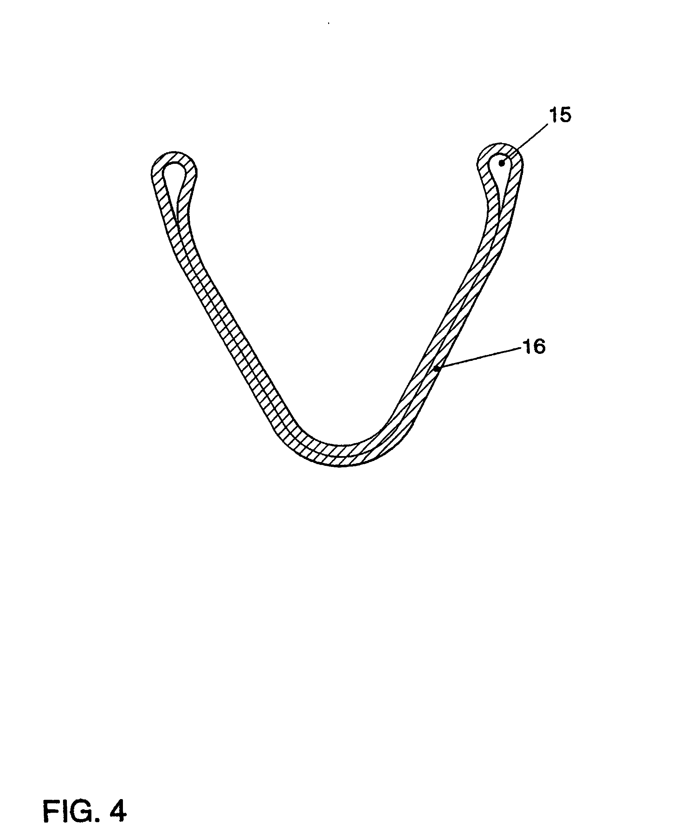

Fig. 3 der Zeichnung schließlich zeigt einen Schnitt gemäß der Linie III-III nach Fig. 2 durch den Torsionsquerträger 2. Anhand von Fig. 3 ist es leicht ersichtlich, daß es sich bei dem Torsionsquerträger 2 um ein geschlossenes Hohlprofil handelt, wobei im Bereich des Schnittes III-III eine Aufnahme 14 vorgesehen ist, an der nicht näher dargestellte Vorrichtungen 14 festgelegt werden können. Fig. 4 der Zeichnung zeigt einen Schnitt entlang der Linie IV-IV durch den Torsionsquerträger 2 nach Fig. 2. Wie es sich ohne weiteres anhand eines Vergleiches der Fig. 3 und der Fig. 4 ergibt, verjüngt sich der Hohlraum 15 des geschlossenen hohlprofilförmigen Torsionsquerträgers 2 von der Verbindungsstelle des Torsionsquerträgers 2 am Längsträger 1, das heißt von der Anbindungsfläche 13 in Richtung zur Fahrzeuglängsmittelachse I-I (siehe auch Fig. 2), so daß die Profilwandungen 16 des Torsionsquerträgers 2 im Bereich der Fahrzeuglängsmittelachse I-I aneinander zur Auflage kommen.

Die erfindungsgemäße Verbundlenkerachse zeichnet sich durch eine große Stützbasislänge aus und weist gekrümmte Längsträger auf, die einfach herzustellen sind, da sie aus einem Rohr hergestellt und gebogen werden können. Dies führt dazu, daß sich die Verbundlenkerachse einfach und damit kostengünstig herstellen läßt und darüber hinaus eine raumsparende Konstruktion darstellt, da sich die Längslenker im Bereich "C" von der Fahrzeuglängsmittelachse I-I betrachtet nach außen gerichtet gekrümmt aufweiten, so daß in diesem Bereich zwischen den Längsträgern Bauraum gewonnen wird, der beispielsweise für die Anordnung des Kraftstofftanks des Kraftfahrzeugs zur Verfügung steht, so daß dieser aufgrund des durch die Krümmung des Längsträgers 1 gewonnenen Bauraumes vergrößert werden kann.

Hinsichtlich vorstehend im einzelnen nicht näher erläuterter Merkmale der Erfindung wird im übrigen ausdrücklich auf die Ansprüche und die Zeichnung verwiesen.

### BEZUGSZEICHENLISTE

- 1: Längsträger
- 2: Torsionsquerträger
- 3: hinteres Ende
- 4: Aufnahme
- 5: Radträger
- 6: Anbindungsfläche
- 7: Anlenkpunkt
- 8: Längsträgermittelachse
- 9: Lager
- 10: Schraubenbohrungen
- 11: Aufnahme
- 12: Gewindebohrung
- 13: Anbindungsfläche
- 14: Aufnahme
- 15: Hohlraum
- 16: Profilwandungen

## Patentansprüche

1. Verbundlenkerachse für ein Kraftfahrzeug mit zwei sich im wesentlichen in Fahrzeuglängsrichtung erstreckenden Längsträgem (1) und einem mit den beiden Längsträgem (1) verbundenen Torsionsquerträger (2), wobei ein vorderes Ende jedes Längsträgers (1) an dem Fahrzeug angelenkt ist und ein hinteres Ende zur drehbaren Anordnung eines Rades ausgebildet ist, und wobei die Längsträger (1) im Bereich ihrer Anlenkung an dem Fahrzeug von einer Längsmittelachse des Fahrzeugs in Richtung nach außen zur Verbreiterung einer Stützbasis gekrümmt ausgebildet sind, derart, daß sich ein Anlenkpunkt (7) außerhalb einer parallel zu der Fahrzeuglängsmittelachse verlaufenden Längsträgermittelachse befindet, **dadurch gekennzeichnet, daß** jeder Längsträger (1) aus einem einstückigen Rohr C-förmig gebogen ist, dessen Enden in Richtung parallel zu der Fahrzeuglängsmittelachse angeordnet sind und an denen jeweils ein Anschlußelement (5, 11) mit einer parallel zu der Fahrzeuglängsmittelachse verlaufenden Anschlußfläche abgestützt und befestigt ist.

2. Verbundienkerachse nach Anspruch 1, **dadurch gekennzeichnet, daß** an dem Rohrende des Längsträgers (1) im Bereich der Anlenkung an dem Fahrzeug eine Aufnahme für ein Lager (9) angeordnet ist

3. Verbundlenkerachse nach Anspruch 2, **dadurch gekennzeichnet, daß** die Aufnahme eine das Rohrende verschließende Platte (11) mit einer Gewindebohrung (12) ist.

4. Verbundlenkerachse nach Anspruch 3, **dadurch gekennzeichnet, daß** die Platte eine weitgehend parallel zur Fahrzeuglängsmittelachse verlaufende Anbindungsfläche aufweist.

5. Verbundlenkerachse nach einem der Ansprüche 1 bis 4, **dadurch gekennzeichnet, daß** der Torsionsqusrträger (2) ein im Querschnitt U-förmiges Profil besilzt.

6. Verbundlenkerachse nach einem der Ansprüche 1 bis 5, **dadurch gekennzeichnet, daß** der Torsionsquerträger (2) ein geschlossenes Hohlprofil (15) ist.

7. Verbundlenkerachse nach einem der Ansprüche 1 bis 6, **dadurch gekennzeichnet, daß** der Torsionsquerträger (2) ein geschlossenes Hohlprofil ist, dessen Hohiraum (15) sich von der Verbindungsstelle mit dem Längsträger (1) zur Fahrzeuglängsmittelachse hin verjüngt.

8. Verbundlenkerachse nach einem der Ansprüche 1 bis 7, **dadurch gekennzeichnet, daß** der Torsionsquerträger (2) zur Verstimmung des Eigenschwingverhaltens asymmetrisch ausgebildet ist.

9. Verbundlenkerachse nach einem der Ansprüche 1 bis 8, **dadurch gekennzeichnet, daß** eines der Anschlußelemente ein Radträger (5) mit einer parallel zu der Fahrzeuglängsmittelachse verlaufenden Anbindungsftäche (6) für ein Fahrzeugrad ist.

10. Verbundlenkerachse nach einem der Ansprüche 1 bis 9, **dadurch gekennzeichnet, daß** die Aufnahme für das Lager (9) in ein Rohrende eingesetzt ist.

## Claims

1. Composite link axle for a motor vehicle, with two side members (1) extending essentially in the vehicle longitudinal direction and with a torsion crossmember (2) connected to the two side members (1), a front end of each side member (1) being articulated on the vehicle and a rear end being designed for the rotatable arrangement of a wheel, and the side members (1) being designed, in the region of their articulation on the vehicle, to be curved from a longitudinal mid-axis of the vehicle outwards for the broadening of a supporting base, in such a way that an articulation point (7) is located outside a side-member mid-axis running parallel to the vehicle longitudinal mid-axis, **characterized in that** each side member (1) is bent in a C-shaped manner out of a one-piece tube, the ends of which are arranged parallel to the vehicle longitudinal mid-axis and on the ends of which a connection element (5, 11) is in each case supported and fastened with a connection surface running parallel to the vehicle longitudinal mid-axis.

2. Composite link axle according to Claim 1, **characterized in that** a receptacle for a bearing (9) is arranged at the tube end of the side member (1) in the region of the articulation on the vehicle.

3. Composite link axle according to Claim 2, **characterized in that** the receptacle is a plate (11) closing the tube end and having a threaded bore (12).

4. Composite link axle according to Claim 3, **characterized in that** the plate has a tie-up surface running largely parallel to the vehicle longitudinal mid-axis.

5. Composite link axle according to one of Claims 1 to 4, **characterized in that** the torsion crossmember (2) possesses a profile of U-shaped cross section.

6. Composite link axle according to one of Claims 1 to 5, **characterized in that** the torsion crossmember (2) is a closed hollow profile (15).

7. Composite link axle according to one of Claims 1 to 6, **characterized in that** the torsion crossmember (2) is a closed hollow profile, the cavity (15) of which narrows from the point of connection to the side member (1) towards the vehicle longitudinal mid-axis.

8. Composite link axle according to one of Claims 1 to 7, **characterized in that** the torsion crossmember (2) is designed asymmetrically for the detuning of the characteristic oscillation behaviour.

9. Composite link axle according to one of Claims 1 to 8, **characterized in that** one of the connection elements is a wheel carrier (5) with a tie-up surface (6) for a vehicle wheel, the said tie-up surface running parallel to the vehicle longitudinal mid-axis.

10. Composite link axle according to one of Claims 1 to 9, **characterized in that** the receptacle for the bearing (9) is inserted into one tube end.

## Revendications

1. Essieu à bras combinés pour un véhicule automobile comprenant deux bras longitudinaux (1) s'étendant sensiblement dans le sens longitudinal du véhicule et une barre de torsion transversale (2) combinée aux deux bras longitudinaux (1), où une extrémité avant de chaque bras longitudinal est articulée au véhicule et où une extrémité arrière est conçue pour la disposition d'une roue permettant sa rotation et dans lequel les bras longitudinaux (1), dans la zone de leur articulation sur le véhicule, sont réalisés sous une forme courbée vers l'extérieur par rapport à l'axe médian longitudinal du véhicule afin d'élargir une base d'appui, de telle sorte qu'un point d'articulation (7) se trouve à l'extérieur d'un axe médian du bras longitudinal s'étendant parallèlement à l'axe médian longitudinal du véhicule, **caractérisé en ce que** chaque bras longitudinal (1) est cintré en forme de C à partir d'un tube d'une seule pièce, dont les extrémités sont disposées dans la direction parallèle à l'axe médian longitudinal du véhicule, extrémités sur lesquelles un élément de raccordement (5, 11) est à chaque fois supporté et fixé grâce à une surface de raccordement s'étendant parallèlement à l'axe médian longitudinal du véhicule.

2. Essieu à bras combinés selon la revendication 1, **caractérisé en ce que**, sur l'extrémité du tube du bras longitudinal (1), dans la zone d'articulation sur le véhicule, on a prévu un logement pour un palier (9).

3. Essieu à bras combinés selon la revendication 2, **caractérisé en ce que** le logement est un plateau (11) obturant l'extrémité du tube et pourvu d'un trou taraudé (12).

4. Essieu à bras combinés selon la revendication 3, **caractérisé en ce que** le plateau présente une surface de raccordement s'étendant quasiment parallèlement à l'axe médian longitudinal du véhicule.

5. Essieu à bras combinés selon l'une quelconque des revendications 1 à 4, **caractérisé en ce que** la barre de torsion transversale (2) dispose d'un profilé avec une section transversale en forme de U.

6. Essieu à bras combinés selon l'une quelconque des revendications 1 à 5, **caractérisé en ce que** la barre de torsion transversale (1) est un profilé creux fermé (15).

7. Essieu à bras combinés selon l'une quelconque des revendications 1 à 6, **caractérisé en ce que** la barre de torsion transversale (2) est un profilé creux fermé dont la cavité (15) se réduit à partir de l'endroit de jonction avec le bras longitudinal (1) jusqu'à l'axe médian longitudinal du véhicule.

8. Essieu à bras combinés selon l'une quelconque des revendications 1 à 7, **caractérisé en ce que** la barre de torsion transversale (2) est conçue de manière asymétrique afin de ne pas entrer en résonance.

9. Essieu à bras combinés selon l'une quelconque des revendications 1 à 8, **caractérisé en ce qu'**un des éléments d'obturation est un support de roue (5) avec une surface de raccordement (6) pour une roue, qui s'étend parallèlement à l'axe médian longitudinal du véhicule.

10. Essieu à bras combinés selon l'une quelconque des revendications 1 à 9, **caractérisé en ce que** le logement pour le palier (9) est placé dans une extrémité du tube.
